# EUROPEAN PATENT APPLICATION

(11) **EP 3 382 846 A1**
(43) Date of publication of application: **03.10.2018**
(21) Application number: 18163901.4
(22) Date of filing: 26.03.2018
(51) Int. Cl.: H02J 7/00, H02J 7/02, H02J 50/10, A47B 37/00

(54) **WIRELESS POWER TRANSFER UNIT**

(30) Priority: 27.03.2017 GB 201704864
(71) Applicant: Frank Olsen Furniture Ltd, Unit 10 Alvaston Business Park Nantwich Cheshire CW5 6PF (GB)
(72) Inventor: GRAYBROOK, Charles William, Nantwich, Cheshire CW5 6PF (GB)
(74) Representative: Appleyard Lees IP LLP

(57) **Abstract**

A wireless power transfer unit suitable for use with an item of furniture. The wireless power transfer unit comprises: a transmitter operable to transmit field energy to charge an appliance located in a charging position in proximity therewith; and a visual indicator operable to emit light as an indication that an appliance is located in the charging position, the visual indicator arranged with the transmitter such that the visual indicator is obscured by an appliance located in the charging position.

## Description

### Field of the Invention

The present invention is directed towards a wireless power transfer unit suitable for use with an item of furniture.

### Background to the Invention

Stand-alone wireless power transfer units for charging appliances such as mobile phones are well known, as are wireless power transfer units suitable for use with an item of furniture. Wireless power transfer units have been incorporated into television tables so that an appliance placed on the top of the television table can receive field energy from the wireless power transfer unit.

While the existing wireless power transfer units have been successful, it is desirable to further improve such wireless power transfer units or at least provide alternative wireless power transfer units.

### Summary of the Invention

Accordingly, the present invention provides a wireless power transfer unit suitable for use with an item of furniture, the wireless power transfer unit comprising: a transmitter operable to transmit field energy to charge an appliance located in a charging position in proximity therewith; and a visual indicator operable to emit light as an indication that an appliance is located in the charging position, the visual indicator arranged with the transmitter such that the visual indicator is obscured by an appliance located in the charging position.

In one example embodiment, the visual indicator is arranged with the transmitter such that the visual indicator is obscured by an appliance located in the charging position. Therefore the light emitted by the visible indicator is obscured by the appliance located in the charging position. In this way, the visual indicator does not present a visual distraction to the user when the appliance is being charged. However, the visual indicator may still emit light such that a user can confirm that the wireless power transfer unit is working and has been charging the appliance, when the appliance is subsequently removed from the charging position.

The visual indicator may be operable to emit light as an indication that an appliance located in the charging position receives field energy from the transmitter.

The visual indicator may be operable to temporarily emit light when an appliance is removed from the charging position so as to provide a visual indication that charging was taking place. Advantageously, the visual indicator enables a user to determine whether the wireless power transfer unit is working and charging the appliance by removing the appliance from the charging position. In this way, the appliance no longer obscures the visual indicator and as such the user can observe the emitted light. The construction of the wireless power transfer unit advantageously enables the user to determine if the appliance is not correctly placed in the charging position, or is not able to receive field energy from the wireless power transfer unit.

The visual indicator may be arranged such that the light emitted therefrom is substantially obscured by an appliance located in the charging position.

The visual indicator may be disposed within the transmitter.

The transmitter may comprise an induction coil. The visual indicator may be disposed within a central section of the induction coil.

The visual indicator may be located within the same plane as the induction coil.

Accordingly, the present invention further provides an item of furniture comprising a wireless power transfer unit as outlined above.

The item of furniture may be a table. Here, "table" includes cabinets and cupboards, sideboards, dressers and the like, which have a top surface on which items such as mobile phones can be placed.

The item of furniture may be a bedside table. Advantageously, the wireless power transfer unit of the present invention is able to charge an appliance located in the charging position without creating a visual distraction to a person who may be sleeping in the room in which the bedside table is located. However, the visual indicator may still emit light such that a user can confirm that the wireless power transfer unit is working and has been charging the appliance, when the appliance is subsequently removed from the charging position.

The charging position may be located on the top of the table.

The wireless power transfer unit may be adapted to be disposed within the table at a location underneath the charging position.

At least in the charging position, the top of the table may be constructed from a transparent or translucent material. In this way the top of the table can be smooth, without variations in texture or interruptions across its surface, the wireless power transfer unit is protected by the surface, but light can still be emitted therefrom.

The charging position may be located within a central region of the top of the table.

The top of the table may have one or more charging position indicators to indicate the charging position.

Accordingly, the present invention further provides a method of operating a wireless power transfer unit for use with an item of furniture, the method comprising: charging an appliance located in a charging position; and displaying a visual indicator that the appliance has been being charged only after the charging of the appliance stops.

According to the present invention there is provided an apparatus and method as set forth in the appended claims. Other features of the invention will be apparent from the dependent claims, and the description which follows.

Although a few preferred embodiments of the present invention have been shown and described, it will be appreciated by those skilled in the art that various changes and modifications might be made without departing from the scope of the invention, as defined in the appended claims.

### Introduction to the Drawings

For a better understanding of the invention, and to show how embodiments of the same may be carried into effect, reference will now be made, by way of example only, to the accompanying diagrammatic drawings in which:
Figure 1 is a simplified schematic diagram of a wireless power transfer unit according to an example embodiment;
Figure 2 is a simplified schematic diagram of an item of furniture comprising a wireless power transfer unit according to an example embodiment;
Figure 3 is another simplified schematic diagram of an item of furniture comprising a wireless power transfer unit according to an example embodiment;
Figure 4 is another simplified schematic diagram of an item of furniture comprising a wireless power transfer unit according to an example embodiment;
Figure 5 is a top view of an item of furniture comprising a wireless power transfer unit according to an example embodiment;
Figure 6 is another top view of an item of furniture comprising a wireless power transfer unit according to an example embodiment;
Figure 7 is another top view of an item of furniture comprising a wireless power transfer unit according to an example embodiment;
Figure 8 is a sectional view of a wireless power transfer unit disposed within an item of furniture according to an example embodiment; and
Figure 9 is a flow diagram illustrating a method according to an example embodiment.

### Description of Exemplary Embodiments

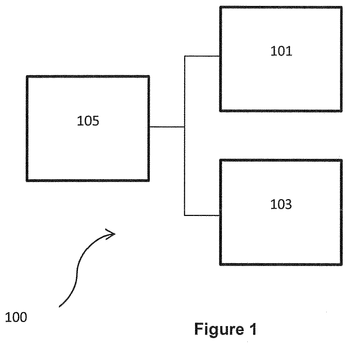

Referring to Figure 1 there is shown a simplified schematic diagram of a wireless power transfer unit according to an exemplary embodiment. The wireless power transfer unit is indicated generally by the reference numeral 100. The wireless power transfer unit 100 comprises three main components that are operatively interconnected with one another: a transmitter 101, a visual indicator 103, and a controller 105. The wireless power transfer unit 100 is intended to be incorporated into an item of furniture, and to transfer field energy to an appliance such as a mobile phone, as is described in more detail below. The source of power for the wireless power transfer unit 100 is not shown, but will be understood to comprise a suitable wired connection to an electricity supply, either of mains voltage, or stepped down to a working voltage such as may be delivered through a USB type connection or similar.

The transmitter 101 and the visual indicator 103 are arranged to operate under the control of the controller 105. Although the controller 105 is shown as a separate functional unit in the embodiment of Figure 1, it will be understood that the controller's functionality may be provided by circuitry that is physically arranged within or otherwise integrated with the transmitter 101 and/or visual indicator 103.

The transmitter 101 is operable to transmit field energy to charge an appliance located in a charging position, the charging position located in proximity to the transmitter 101. In the example embodiments shown this is in the form of a time varying electromagnetic field that can be used in an inductive power transfer to the appliance.

The visual indicator 103 comprises an LED, and is operable to emit light as an indication that an appliance is located in the charging position for charging. However, the visual indicator 103 is arranged with the transmitter 101 such that the visual indicator 103 is in use obscured by an appliance located in the charging position.

By providing the visual indicator 103 with the transmitter 101 such that the visual indicator 103 is obscured by an appliance located in the charging position, light emitted by the visible indicator 103 is not visible when charging takes place. In this way, the visual indicator 103 does not present a visual distraction to the user when an appliance is being charged, even though the visual indicator operates to emit light during the charging process.

However, the visual indicator 103 operates to emit light when the appliance is subsequently removed from the charging position, and in this way a user can confirm that the wireless power transfer unit is working. In the example embodiment of Figure 1, the controller 105 is arranged to detect that an appliance located in the charging position receives field energy from the transmitter 101, and therefore to infer that charging is taking place and cause the visual indicator 103 to light up. When the appliance is subsequently removed from the charging position the visual indicator 103 is arranged to remain visible for a period of time as a confirmation that charging was just occurring.

In another embodiment the controller 105 is arranged to cause the visual indicator to operate only after charging stops, to indicate that charging was previously just occurring. In such embodiments there is potentially the advantage of reduced energy consumption by not powering the visual indicator 103 during charging, but in the earlier-described embodiments which include operation of the visual indicator 103 during charging, even though it is obscured, there is a simplification in that the transmitter 101 can be operatively linked to the visual indicator 103 so that the operation of the transmitter 101 starts the operations of the visual indicator 103, and that there is a run-on time provided for both after removal of the appliance, in which the transmitter 101 still operates to generate field energy for a short period and the visual indicator 103 operates to indicate that charging was just occurring..

As described herein, the visual indicator 103 enables a user to determine whether the wireless power transfer unit 100 is working and charging the appliance, by the user removing the appliance from the charging position. On removal from the charging position the appliance no longer obscures the visual indicator 103, an the user can observe the emitted light as confirmation that charging was taking place, or at least that any problem in charging is with the appliance, rather than with the supply or power to/operation of the wireless power transfer unit 100/placement of the appliance in the charging position.

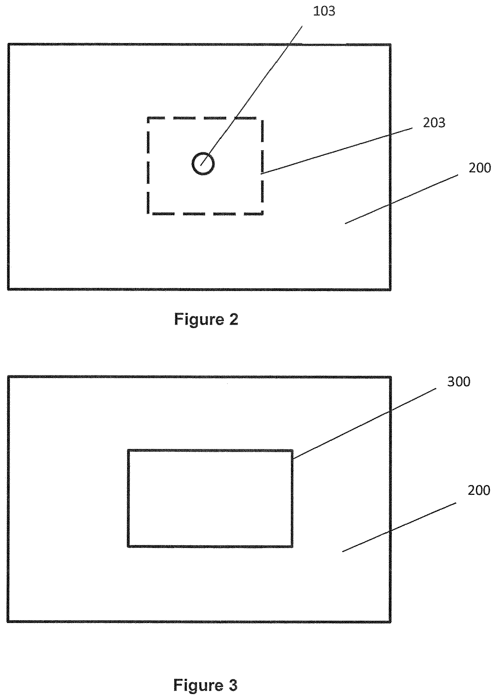

Referring to Figure 2, there is shown a simplified schematic diagram an item of furniture 200. The item of furniture 200 is shown in plan view, and comprises a wireless power transfer unit. The charging position 203 is indicated schematically by the dashed line, and the visual indicator 103 is not operative.

The item of furniture 200 comprises a top surface that includes the charging position 203 there-on, and on which appliances such as mobile phones can be placed. The charging position is located within a central region of the top of the table.

In this example the item of furniture 200 comprises a bedside table, and is provided with a transparent or translucent material that forms the top surface so that the visual indicator 103 provided there-below remains visible to the user. In example embodiments the top comprises a glass material, such as a toughened, smoked glass material or the like. In other embodiments the top surface of the item of furniture may comprise a coating to provide a suitable aesthetic finish, while still enabling light emitted from the visual indication 103 to be seen through the top surface of the item of furniture 200. In other embodiments the light transmittivity may vary across the top surface, such that a specific light transmitting region is provided for the visual indicator, or an opening is provided through which light may escape from the surface is provided.

Advantageously, the wireless power transfer unit in the item of furniture 200 is able to charge an appliance located in the charging position without creating a visual distraction to a person who may be sleeping, or is falling asleep, in the room in which the item of furniture 200 is located.

Referring to Figure 3, the item of furniture 200 is shown with an appliance 300 located in the in charging position 203 of Figure 2. Field energy is transmitted to the appliance 300, and the visual indicator 103 emits light. However, the appliance 300 obscures the emitted light so that the visual indicator 103 is not visible.

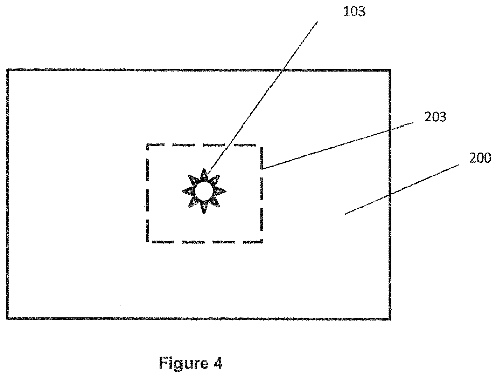

Referring to Figure 4, the item of furniture 200 is shown at a time just after when the appliance 300 has been removed from charging position 203. As indicated schematically, the visual indicator 103 is emitting light. The visual indicator 103 either starts, or continues to emit light after the appliance has been removed so that a user is informed that the wireless power transfer unit was working to charge the appliance 300.

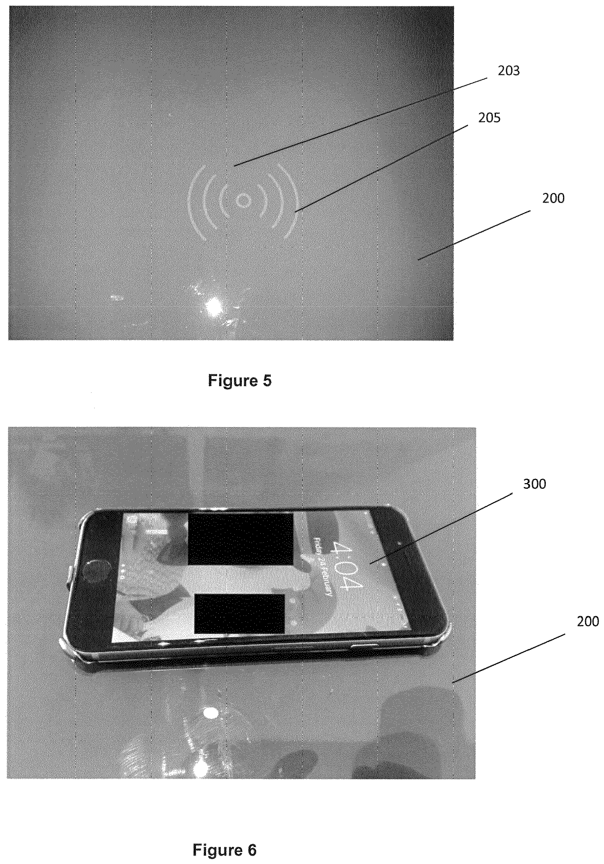

Referring to Figure 5, there is shown a top view of an item of furniture 200 comprising a wireless power transfer unit, according to another example embodiment.

In Figure 5 the item of furniture 200 is shown in plan view, and comprises a wireless power transfer unit. The charging position 203 is indicated schematically by a graphical symbol 205 that is marked on the top surface there-of. In this instance the graphical symbol 205 comprises concentric circular line elements. At the centre of the graphical symbol 205 is a translucent section of through which the visual indicator 103 may be seen, when operative. In Figure 5 the top surface of the item of furniture comprises a piece of smoked glass with the wireless power transfer unit positioned adjacent the underside there-of.

Figure 6 shows the item of furniture 200 of Figure 5 with an appliance 300 in place in the charging position 203, and being charged. The visual indicator 103 lies below the appliance 300, and is operating to emit light. However, light from the visual indicator 103 is prevented from shining out of the top of the item of furniture 200 and into the environment around the item of furniture because the appliance 300 is positioned obscure the light path.

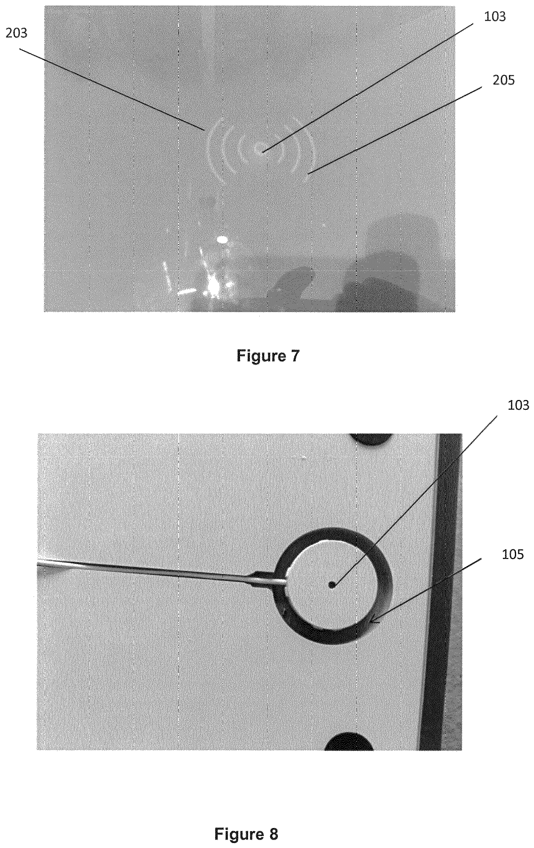

From the position in Figure 6, Figure 7 is another top view of the item of furniture 200, this time with the visual indicator 103 lit up to show that wireless power transfer had been taking place in the Figure 6 configuration, in which the appliance 300 (in the form of a mobile phone) was in place in the charging position 203.

Figure 8 is a view of the item of furniture of Figures 5 through 7 with the top surface removed, to show the visual indicator 103 and transmitter 101. The transmitter 101 comprises an induction coil, and the visual indicator 103 is disposed within a central section there-of.

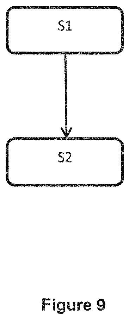

In addition to the apparatus and device features set out above, there is also provided a method of operating a wireless power transfer unit as shown in Figure 9. The method is useful for charging an appliance, and comprises charging an appliance located in a charging position as step S1; and the subsequent step of displaying a visual indicator that the appliance has been being charged S2. The step of displaying a visual indicator that the appliance has been being charged is performed only after the charging of the appliance stops. For example, the step of displaying a visual indicator that the appliance has been being charged is performed by removal of the appliance from the charging position so that an indicator under the charging position is uncovered and thus becomes visible.

As set out above, the wireless power transfer unit and furniture which includes the wireless power transfer unit can be easily fabricated to indicate that charging has been taking place, and does so without emitting light that might be distracting or disrupt sleep in a bedroom setting.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A wireless power transfer unit suitable for use with an item of furniture, the wireless power transfer unit comprising:
a transmitter operable to transmit field energy to charge an appliance located in a charging position in proximity therewith; and
a visual indicator operable to emit light as an indication that an appliance is located in the charging position, the visual indicator arranged with the transmitter such that the visual indicator is obscured by an appliance located in the charging position.

2. A wireless power transfer unit as claimed in claim 1, wherein the visual indicator is operable to temporarily emit light when an appliance is removed from the charging position so as to provide a visual indication that charging was taking place.

3. A wireless power transfer unit as claimed in claim 1 or 2, wherein the visual indicator is arranged such that the light emitted therefrom is substantially obscured by an appliance located in the charging position.

4. A wireless power transfer unit as claimed in any preceding claim, wherein the visual indicator is disposed within the transmitter.

5. A wireless power transfer unit as claimed in any preceding claim, wherein the transmitter comprises an induction coil, and the visual indicator is disposed within a central section of the induction coil.

6. A wireless power transfer unit as claimed in claim 5, wherein the visual indicator is located within the same plane as the induction coil.

7. An item of furniture comprising a wireless power transfer unit as claimed in any of the preceding claims.

8. An item of furniture as claimed in claim 7, wherein the item of furniture is a table.

9. An item of furniture as claimed in claim 8, wherein the item of furniture is a bedside table.

10. An item of furniture as claimed in claim 8 or 9, wherein the charging position is located on the top of the table.

11. An item of furniture as claimed in claim 10, wherein the wireless power transfer unit is adapted to be disposed within the table at a location underneath the charging position.

12. An item of furniture as claimed in claim 10 or 11, wherein at least in the charging position, the top of the table is constructed from a transparent or translucent material.

13. An item of furniture as claimed in any of claims 10 to 12, wherein the charging position is located within a central region of the top of the table.

14. An item of furniture as claimed in claim 10 to 13, wherein the top of the table has one or more charging position indicators to indicate the charging position.

15. A method of operating a wireless power transfer unit for use with an item of furniture, the method comprising:
charging an appliance located in a charging position; and
displaying a visual indicator that the appliance has been being charged only after charging of the appliance stops.
